# EUROPEAN PATENT SPECIFICATION

(11) **EP 3 681 048 B1**
(45) Date of publication and mention of the grant of the patent: **13.10.2021**
(21) Application number: 19151478.5
(22) Date of filing: 11.01.2019
(51) Int. Cl.: H04B 3/487, H04N 9/79, H04B 3/32

(54) **METHOD, DEVICE, AND COMPUTER PROGRAM PRODUCT FOR MITIGATING INTER-CABLE CROSSTALK**
VERFAHREN, VORRICHTUNG UND COMPUTERPROGRAMMPRODUKT ZUR MINDERUNG DES ÜBERSPRECHENS ZWISCHEN KABELN
PROCÉDÉ, DISPOSITIF ET PRODUIT PROGRAMME INFORMATIQUE POUR ATTÉNUER LA DIAPHONIE INTER-CÂBLE

(43) Date of publication of application: 15.07.2020
(73) Proprietor: Vestel Elektronik Sanayi ve Ticaret A.S., 45030 Manisa (TR)
(72) Inventor: YILMAZLAR,, Ísmail, 45030 Manisa (TR)
(74) Representative: Flint, Adam

(56) References cited:
- FR-A1- 2 449 368
- US-A- 5 196 733

## Description

### Technical Field

The present disclosure relates to a method, device and computer program product for mitigating inter-cable crosstalk.

### Background

The current TV sets have a plurality of input/output (I/O) interfaces to which numerous cables can be connected. However, proximate position of cables and defective shielding may lead to electromagnetic compatibility (EMC) issues caused by inter-cable crosstalk, or mutual coupling, between adjacent cables. In general, EMC is concerned with the unintentional generation, propagation, and reception of electromagnetic energy, which may result in unwanted effects such as signal interference (e.g., comprising electromagnetic interference (EMI), radio frequency interference (RFI), noise and crosstalk) and/or physical damage in equipment.

Thus, the susceptibility of the cables to interference may be such that their immunity to inter-cable crosstalk remains insufficient, thereby continuing to impact the quality of the signals transmitted along those cables.

US 5 196 733 A discloses a crosstalk-resistant multi-input to single-output analogue switching device having an additional provision of a second reference voltage source and a second selective switch unit connected between a differential amplification unit and first and second voltage sources for supplying the bias voltage to the differential amplification unit, thereby electrically isolating, with the switching operation of the second selective switch unit, a connection path between each of non-selected input ports and an enabled differential amplifier and preventing occurrence of crosstalk-phenomenon at an output stage. FR 2 449 368 A1 discloses a switching circuit comprising a plurality of input channels and an output channel and in which a further reduction of the cross-talk is guaranteed. The switching circuit is characterized in that the bases of transistors which are arranged as switchable transistorized current sources are connectable, via the selection switch, to a terminal for carrying a d.c. voltage having a value at which the transistor current source can be driven to the saturated state but however, cannot carry current because the signal voltages present at the bases of said first and second transistors in the switching devices always cut off these two transistors.

### Summary

According to a first aspect disclosed herein, there may be provided a method operating a consumer electronics device, wherein a plurality of cables are connected to corresponding audio/video input/output ports of the consumer electronics device. The method may comprise receiving an analogue video signal transmitted along a connected cable; detecting and measuring an AC component in a part of the received analogue video signal corresponding to a video blanking period during a horizontal scan line; comparing the measured AC component with a predetermined threshold level; if a level of the measured AC component is higher than the predetermined threshold level, in response, extracting the measured AC component, and then comparing the measured AC component with analogue video signals transmitted along the remaining connected cables by measuring similarity between the measured AC component and the analogue video signals transmitted along the remaining connected cables; and if there is similarity between the measured AC component and at least one of the analogue video signals transmitted along the remaining connected cables, in response, providing an alert message to a user of the consumer electronics device for allowing the user to mitigate the inter-cable crosstalk. Thereby, the inter-cable crosstalk can be mitigated by an action of the user.

In an example of the first aspect, the part of the received analogue video signal in which the AC component is detected and measured may correspond to a sync pulse.

In an example of the first aspect, the alert message may comprise information about a cable along which the at least one of the other signals having similarity with the measured AC component is transmitted.

In an example of the first aspect, the alert message may comprise an instruction to the user to remove the cable along which the at least one of the other signals having similarity with the measured AC component is transmitted.

In an example of the first aspect, providing an alert message may comprise displaying the alert message on a display unit of the consumer electronics device.

In an example of the first aspect, the other signals may be audio and/or video signals.

In an example of the first aspect, the similarity may be measured using cross-correlation.

In an example of the first aspect, the predetermined threshold level may be stored in a non-volatile memory of the consumer electronics device.

According to a second aspect disclosed herein, there may be provided a consumer electronics device. The device may comprise a plurality of audio/video input/output ports to which a plurality of cables are connected and a signal processing apparatus. The signal processing apparatus may be arranged to receive an analogue video signal transmitted along a connected cable; detect and measure an AC component in a part of the received analogue video signal corresponding to a video blanking period during a horizontal scan line; compare the measured AC component with a predetermined threshold level; if a level of the measured AC component is higher than the predetermined threshold level, in response, extract the measured AC component, and then compare the measured AC component with analogue video signals transmitted along the remaining connected cables by measuring similarity between the measured AC component and the analogue video signals transmitted along the remaining connected cables; and if there is similarity between the measured AC component and at least one of the analogue video signals transmitted along the remaining connected cables, in response, provide an alert message to a user of the consumer electronics device for allowing the user to mitigate the inter-cable crosstalk.

In an example of the second aspect, the device may comprise a display unit, which is arranged to interact with the signal processing apparatus; and display the alert message provided by the signal processing apparatus in response to interacting with the signal processing apparatus.

In an example of the second aspect, the device may comprise a non-volatile memory, which is arranged to store the predetermined threshold level.

In an example of the second aspect, the signal processing apparatus may be arranged such that the part of the received analogue video signal in which the AC component is detected and measured corresponds to a sync pulse.

According to a third aspect disclosed herein, there may be provided a computer program product comprising program instructions such that, when the computer program is executed on a device, the computing device is arranged to carry out a method according to any of the first aspect and examples of the first aspect.

### Brief Description of the Drawings

To assist understanding of the present disclosure and to show how embodiments may be put into effect, reference is made by way of example to the accompanying drawings in which:
Figure 1 shows schematically an example of a monochrome analogue video signal for one horizontal scan line of an image in the absence of crosstalk disturbance;
Figure 2 shows schematically an example of a colour analogue video signal for one horizontal scan line of an image in the absence of crosstalk disturbance;
Figure 3 shows schematically an example of a VGA signal for one horizontal scan line of an image in the absence of crosstalk disturbance; and
Figure 4 shows schematically a flow chart describing a method of operating a consumer electronics device for allowing the user to mitigate inter-cable crosstalk, according to the present disclosure.

### Detailed Description

In the following, crosstalk or crosstalk noise will designate inter-cable crosstalk caused by adjacent cables. Because of cable proximity, a capacitive-coupled crosstalk noise may occur as a result of electromagnetic interference (EMI) between those cables.

The present disclosure is directed towards a consumer electronics device, which may be, for example, a media device such as a television (TV) set, or a personal computing device such as a laptop computer, a desktop or personal computer and a tablet computer among others. The consumer electronics device may comprise a plurality of audio/video (A/V) input/output (I/O) ports. In particular, the video input ports may be arranged to receive analogue video signals either directly from an analogue signal source or indirectly from a digital signal source via a digital-to-analogue converter (DAC) such as a set-top box (STB) which converts standard-definition television (SDTV) and high-definition television (HDTV) digital signals to SDTV analogue signals. The analogue video signals may be broadcast in a video format such as phase alternating line (PAL), séquentiel couleur à mémoire (SECAM) and national television system committee (NTSC).

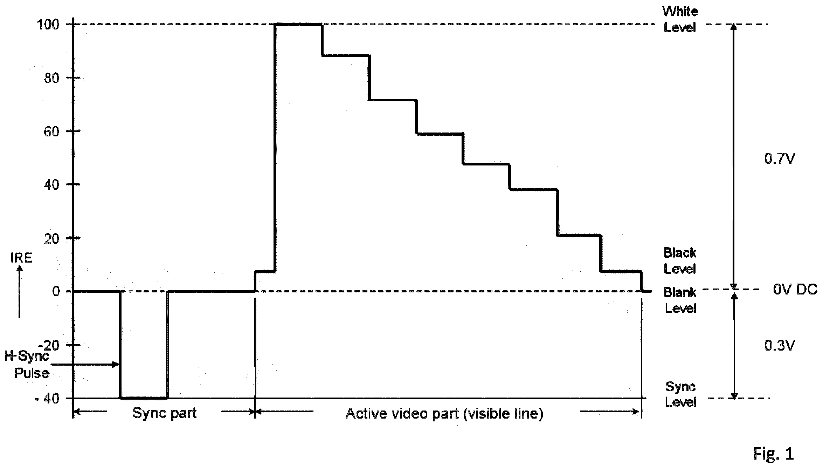

Figure 1 shows schematically an example of a monochrome analogue video signal for one horizontal scan line of an image in the absence of crosstalk disturbance. The monochrome analogue video signal may, for example, be a component video signal (also known as YPbPr signal).

In terms of signal amplitudes, the horizontal scan line may comprise four levels: a white level corresponding to the maximum amplitude (e.g., 100 IRE or 0.7V) the signal may normally reach, a blank level being used as a reference (e.g., 0 IRE or 0V DC) for all amplitudes, a sync level corresponding to a negative-going pulse (e.g., sync tip at -40 IRE or -0.3 V) which provides synchronization information, and a black level corresponding to the lowest amplitude the signal may reach during the active image time. Sometimes, the black level is omitted and it is then assumed that the black level is equal to the blank level.

In terms of time, the horizontal scan line is divided into two separate parts: a sync part corresponding to a video blanking period (also known as image reconstructing timing period) and an active video part. In turn, the video blanking period is divided into a front porch, a sync pulse or H-sync pulse (i.e., the negative-going pulse itself) and a back porch. As depicted therein, the front porch is inserted between the end of each transmitted line of the image and the leading edge of the sync pulse, the back porch is inserted between the rising edge of the sync pulse and the start of the active video, and the sync pulse consists of only a DC level in the absence of crosstalk distortion such that it has no AC component. The sync part does not interfere with the active video part because it is below the black level and cannot be seen.

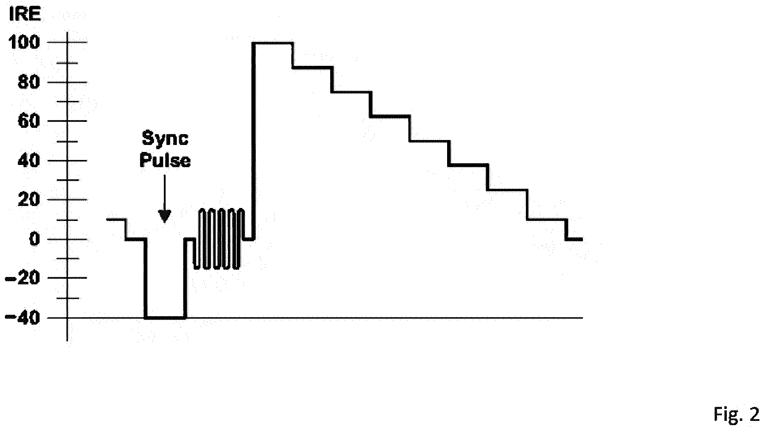

Figure 2 shows schematically an example of a colour analogue video signal for one horizontal scan line of an image in the absence of crosstalk disturbance. The colour analogue video signal may, for example, be a composite video signal (also known as CVBS signal).

The main difference with respect to the monochrome analogue video signal of figure 1 is that, in the case of the colour analogue video signal of figure 2, the back porch additionally includes a colour burst inserted between the rising edge of the sync pulse and the start of the active video so as to form a breezeway between the rising edge of the sync pulse and the start of the colour burst.

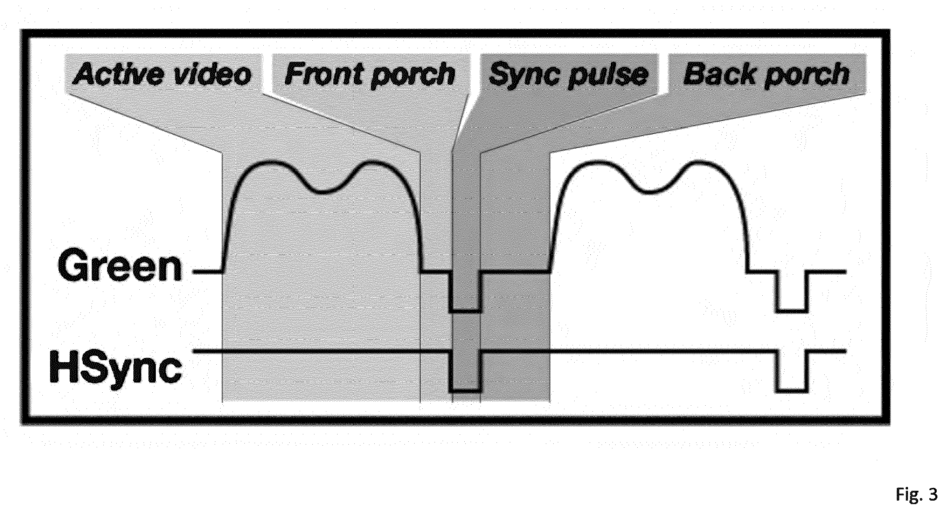

Figure 3 shows schematically an example of a VGA signal for one horizontal scan line of an image in the absence of crosstalk disturbance.

Each line begins with an active video region, in which RGB values are output for each pixel in the line. Referring to the description of figures 1 and 2, the active region is followed by a blanking region, in which black pixels are transmitted. In the middle of the blanking interval, a horizontal sync pulse (depicted as Hsync pulse) is transmitted. The blanking interval before the sync pulse is designated as the "front porch", and the blanking interval after the sync pulse is designated as the "back porch".

The consumer electronics device, in particular the media device, may be arranged to comprise one or more video input ports arranged to receive analogue video signals. In a non-limiting and example list, the ports taken singly or in combination may include:
- a component video port (also known as: YPbPr port), which is arranged to hook up to analogue signal sources (e.g., early media players, early video game consoles, DVD players, etc.) to receive an analogue video signal (also known as YPbPr signal) transmitted along three cables respectively designated as "Y", "Pb" and "Pr" cables;
- a S-video port (also known as: separate video port; split video port; super video port; Y/C port), which is arranged to hook up to an analogue signal source (e.g., S-VHS, analogue broadcast videos, early home computers, early video game consoles, DVD players, etc.) to receive an analogue video signal transmitted along one cable;
- a composite video port (also known as: composite port; composite video baseband signal (CVBS) port; colour, video, blanking and sync (CVBS) port; standard-definition television (SD) video port), which is arranged to hook up to analogue signal sources (e.g., video cassette recorders (VCRs), LaserDiscs (LDs), DVD players, early home computers, early video game consoles, etc.) to receive an analogue video signal transmitted along one cable; and
- a video graphics array port (also known as: VGA port, PC in port), which is arranged to hook up to analogue signal sources (e.g., early desktop or personal computers, early data projectors, laptop computers, DVD players, etc.) to receive an analogue video signal transmitted along one cable.

The consumer electronics device may comprise an A/V signal processing apparatus arranged to process the A/V signals received via the corresponding A/V input ports of the consumer electronics device, and a display unit (also sometimes referred to as a "panel") arranged to display the visible part of the video signals.

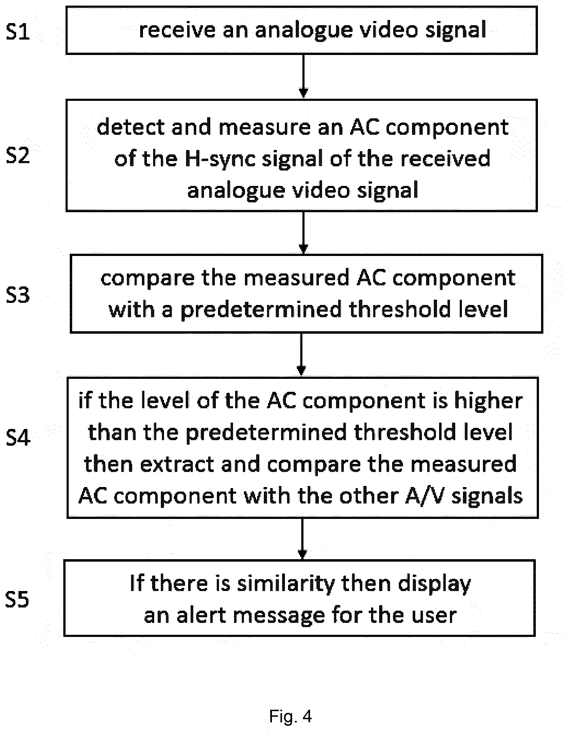

In an example embodiment of the present disclosure in which multiple cables (e.g., YPbPr, S-video, CVBS, VGA, HDMI, Audio in, Audio out, etc.) are plugged into the corresponding A/V I/O ports at the same time, the A/V signal processing apparatus may be arranged to perform the following S 1 to S5, as also depicted in figure 4:
In S1, the A/V signal processing apparatus may receive an analogue video signal (e.g., a YPbPr signal, a CVBS signal, a S-video signal, a VGA signal, etc.) transmitted along a cable from an analogue signal source or a STB box, etc. to the corresponding video input port.
In S2, the A/V signal processing apparatus may detect and measure an AC component of the horizontal sync pulse signal (designated hereafter as H-sync signal) of the received analogue video signal. In an example embodiment, the detection may occur after the H-sync signal has been extracted from the received analogue video signal using a video sync separator. In the absence of crosstalk disturbance, the H-sync signal has a DC level and no AC component, so that the detection of an AC component corresponds to the presence of crosstalk caused by an adjacent cable connected to one of the ports of the consumer electronics device.
In S3, the A/V signal processing apparatus may compare the measured AC component with a predetermined threshold level. The A/V signal processing apparatus may comprise a non-volatile memory for storing the predetermined threshold level. In an example embodiment, the predetermined threshold level may be beforehand set according to specific signal quality criteria. In another example embodiment, the predetermined threshold level may be entered by an input of an end user of the consumer electronics device. The non-volatile memory may be a non-volatile semiconductor memory and include, for example, a read-only memory (ROM), a programmable ROM (PROM), an erasable PROM (EPROM), an electrically erasable PROM (EEPROM), a disk drive, a floppy disk, a compact disc ROM (CD-ROM), a digital versatile disk (DVD), a flash memory (e.g., a floating gate memory, a charge trapping memory, a magneto-resistive random access memory (MRAM), a phase change RAM (PCRAM), etc.) and so on.
In S4, if the comparison result reveals that the measured AC component has a higher level than the predetermined threshold level, thereby meaning that the crosstalk distortion is significant, then the A/V signal processing apparatus may extract and compare the measured AC component with the A/V signals conveyed by the other cables as plugged into the corresponding A/V I/O ports at the same time. The latter comparison may be made by measuring similarity between the measured AC component and the other A/V signals using, for example, cross-correlation technique.
In S5, if the similarity can be detected (i.e., if the comparison measurement shows that there is similarity) for at least one of the other A/V signals, thereby meaning that the cable conveying the at least one of the other A/V signals (i.e., the disturbing cable) is a source of crosstalk disturbance for the cable conveying the analogue video signal whose H-sync signal has the AC component (i.e., the disturbed cable), then the A/V signal processing apparatus may interact with the display unit of the consumer electronics device for an alert message to be provided to the end user by causing the display unit to display the alert message. The alert message may alert the end user, for example, by indicating the disturbing cable(s) and/or informing of the too close proximity between the disturbed cable and the disturbing cable(s) and/or providing instructions for removing said disturbing cable(s). In response, the end user may move the indicated disturbing cable(s) away from the disturbed cable or, in a more efficient manner, pull the indicated disturbing cable(s) out of its(their) corresponding port(s) and remove the indicated disturbing cable(s) away from the disturbed cable. Thereby, the level of the measured AC component can be reduced to an acceptable level below the predetermined threshold level, which enhances the quality of the corresponding analogue video signal. The lower the predetermined threshold level is, the more the signal quality can be after removing the disturbing cables. In an example, the A/V signal processing apparatus may receive an analogue video signal transmitted along a CVBS cable from an analogue signal source and the end user may be alerted that the CVBS cable is disturbed by the audio in cable.

It will be understood that the A/V signal processing apparatus referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs) and so on. The chip or chips may comprise circuitry (as well as possibly firmware) for embodying at least one or more data processors, one or more analogue signal processors, a baseband circuitry and a radio frequency circuitry, which are configurable to operate in accordance with the exemplary embodiments. In this regard, the exemplary embodiments may be implemented at least in part by computer software stored in a (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices may, for example, include a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium such as a solid-state drive (SSD) or other semiconductor-based read access memory (RAM), a read only memory (ROM) such as a compact disc (CD) ROM or a semiconductor ROM, a magnetic recording medium such as a floppy disk or a hard disk, optical memory devices in general and so on.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, modifications not described herein may also be employed within the scope of the invention, which is defined in the claims.

## Claims

1. A method of operating a consumer electronics device, wherein a plurality of cables are connected to corresponding audio/video input/output ports of the consumer electronics device, the method comprising:
receiving (S1) an analogue video signal transmitted along a connected cable;
detecting and measuring (S2) an AC component in a part of the received analogue video signal corresponding to a video blanking period during a horizontal scan line;
comparing (S3) the measured AC component with a predetermined threshold level;
if a level of the measured AC component is higher than the predetermined threshold level, in response, extracting (S4) the measured AC component, and then comparing (S4) the measured AC component with analogue video signals transmitted along the remaining connected cables by measuring similarity between the measured AC component and the analogue video signals transmitted along the remaining connected cables; and
if there is similarity between the measured AC component and at least one of the analogue video signals transmitted along the remaining connected cables, in response, providing (S5) an alert message to a user of the consumer electronics device for allowing the user to mitigate inter-cable crosstalk.

2. The method of claim 1, wherein the part of the received analogue video signal in which the AC component is detected and measured corresponds to a sync pulse.

3. The method of claim 1 or 2, wherein the alert message comprises information about a cable along which the at least one of the other signals having similarity with the measured AC component is transmitted.

4. The method of claim 3, wherein the alert message comprises an instruction to the user to remove the cable along which the at least one of the other signals having similarity with the measured AC component is transmitted.

5. The method of any of claims 1 to 4, wherein providing an alert message comprises displaying the alert message on a display unit of the consumer electronics device.

6. The method of any of claims 1 to 5, wherein the other signals are audio and/or video signals.

7. The method of any of claims 1 to 6, wherein the similarity is measured using cross-correlation.

8. The method of any of claims 1 to 7, wherein the predetermined threshold level is stored in a non-volatile memory of the consumer electronics device.

9. A consumer electronics device, the device comprising:
a plurality of audio/video input/output ports each configured to be connected to a cable; and
a signal processing apparatus, which is arranged to:
receive (S1) an analogue video signal transmitted along a connected cable;
detect and measure (S2) an AC component in a part of the received analogue video signal corresponding to a video blanking period during a horizontal scan line;
compare (S3) the measured AC component with a predetermined threshold level;
if a level of the measured AC component is higher than the predetermined threshold level, in response, extract (S4) the measured AC component, and then compare (S4) the measured AC component with analogue video signals transmitted along the remaining connected cables by measuring similarity between the measured AC component and the analogue video signals transmitted along the remaining connected cables; and
if there is similarity between the measured AC component and at least one of the analogue video signals transmitted along the remaining connected cables, in response, provide (S5) an alert message to a user of the consumer electronics device for allowing the user to mitigate the inter-cable crosstalk.

10. The device of claim 9, comprising:
a display unit, which is arranged to:
interact with the signal processing apparatus; and
display the alert message provided by the signal processing apparatus in response to interacting with the signal processing apparatus.

11. The device of claim 9 or 10, comprising:
a non-volatile memory, which is arranged to:
store the predetermined threshold level.

12. The device of any of claims 9 to 11, wherein the signal processing apparatus is arranged such that the part of the received analogue video signal in which the AC component is detected and measured corresponds to a sync pulse.

13. A computer program product comprising program instructions such that, when the computer program is executed on a device, the computing device is arranged to:
carry out a method according to any one of claims 1 to 8.

## Patentansprüche

1. Verfahren zum Betreiben eines Unterhaltungselektronikgeräts, wobei mehrere Kabel mit entsprechenden Audio/Video-Ein-/Ausgangsports des Unterhaltungselektronikgeräts verbunden sind, wobei das Verfahren Folgendes beinhaltet:
Empfangen (SI) eines analogen Videosignals, das über ein angeschlossenes Kabel übertragen wird;
Erkennen und Messen (S2) einer AC-Komponente in einem Teil des empfangenen analogen Videosignals, der einer Videoaustastperiode während einer horizontalen Abtastzeile entspricht;
Vergleichen (S3) der gemessenen AC-Komponente mit einem vorbestimmten Schwellenpegel;
Extrahieren (S4), falls ein Pegel der gemessenen AC-Komponente höher als der vorbestimmte Schwellenpegel ist, und als Reaktion darauf, der gemessenen AC-Komponente und dann Vergleichen (S4) der gemessenen AC-Komponente mit analogen Videosignalen, die über die verbleibenden angeschlossenen Kabel übertragen werden, durch Messen der Ähnlichkeit zwischen der gemessenen AC-Komponente und den über die verbleibenden angeschlossenen Kabel übertragenen analogen Videosignalen; und
Bereitstellen (S5), falls es eine Ähnlichkeit zwischen der gemessenen AC-Komponente und mindestens einem der über die verbleibenden angeschlossenen Kabel übertragenen analogen Videosignale gibt, und als Reaktion darauf, einer Warnmeldung an einen Benutzer des Unterhaltungselektronikgeräts, um es dem Benutzer zu ermöglichen, Kabelnebensprechen zu vermindern.

2. Verfahren nach Anspruch 1, wobei der Teil des empfangenen analogen Videosignals, in dem die AC-Komponente erkannt und gemessen wird, einem Synchronisationsimpuls entspricht.

3. Verfahren nach Anspruch 1 oder 2, wobei die Warnmeldung Informationen über ein Kabel umfasst, über das das mindestens eine der anderen Signale mit Ähnlichkeit mit der gemessenen AC-Komponente übertragen wird.

4. Verfahren nach Anspruch 3, wobei die Warnmeldung eine Anweisung an den Benutzer umfasst, das Kabel, über das das mindestens eine der anderen Signale mit Ähnlichkeit mit der gemessenen AC-Komponente übertragen wird, zu entfernen.

5. Verfahren nach einem der Ansprüche 1 bis 4, wobei das Bereitstellen einer Warnmeldung das Anzeigen der Warnmeldung auf einer Anzeigeeinheit des Unterhaltungselektronikgeräts beinhaltet.

6. Verfahren nach einem der Ansprüche 1 bis 5, wobei die anderen Signale Audio- und/oder Videosignale sind.

7. Verfahren nach einem der Ansprüche 1 bis 6, wobei die Ähnlichkeit mittels Kreuzkorrelation gemessen wird.

8. Verfahren nach einem der Ansprüche 1 bis 7, wobei der vorbestimmte Schwellenpegel in einem nichtflüchtigen Speicher des Unterhaltungselektronikgeräts gespeichert wird.

9. Unterhaltungselektronikgerät, wobei das Gerät Folgendes umfasst:
mehrere Audio/Video-Ein-/Ausgangsports, die jeweils zum Verbinden mit einem Kabel konfiguriert sind; und
eine Signalverarbeitungsvorrichtung, die ausgelegt ist zum:
Empfangen (SI) eines analogen Videosignals, das über ein angeschlossenes Kabel übertragen wird;
Erkennen und Messen (S2) einer AC-Komponente in einem Teil des empfangenen analogen Videosignals, der einer Videoaustastperiode während einer horizontalen Abtastzeile entspricht;
Vergleichen (S3) der gemessenen AC-Komponente mit einem vorbestimmten Schwellenpegel;
Extrahieren (S4), falls ein Pegel der gemessenen AC-Komponente höher als der vorbestimmte Schwellenpegel ist, und als Reaktion darauf, der gemessenen AC-Komponente und dann Vergleichen (S4) der gemessenen AC-Komponente mit analogen Videosignalen, die über die verbleibenden angeschlossenen Kabel übertragen werden, durch Messen der Ähnlichkeit zwischen der gemessenen AC-Komponente und den über die verbleibenden angeschlossenen Kabel übertragenen analogen Videosignalen; und
Bereitstellen (S5), falls es eine Ähnlichkeit zwischen der gemessenen AC-Komponente und mindestens einem der über das verbleibende angeschlossene Kabel übertragenen analogen Videosignale gibt, und als Reaktion darauf, einer Warnmeldung an einen Benutzer des Unterhaltungselektronikgeräts, um es dem Benutzer zu ermöglichen, Kabelnebensprechen zu vermindern.

10. Gerät nach Anspruch 9, das Folgendes umfasst:
eine Anzeigeeinheit, die ausgelegt ist zum:
Interagieren mit der Signalverarbeitungsvorrichtung; und
Anzeigen der von der Signalverarbeitungsvorrichtung bereitgestellten Warnmeldung als Reaktion auf die Interaktion mit der Signalverarbeitungsvorrichtung.

11. Gerät nach Anspruch 9 oder 10, das Folgendes umfasst:
einen nichtflüchtigen Speicher, der ausgelegt ist zum:
Speichern des vorbestimmten Schwellenwerts.

12. Gerät nach einem der Ansprüche 9 bis 11, wobei die Signalverarbeitungsvorrichtung so ausgelegt ist, dass der Teil des empfangenen analogen Videosignals, in dem die AC-Komponente erkannt und gemessen wird, einem Synchronisationsimpuls entspricht.

13. Computerprogrammprodukt, das Programmbefehle umfasst, so dass bei Ausführung des Computerprogramms auf einem Gerät das Computergerät ausgelegt ist zum:
Durchführen eines Verfahrens nach einem der Ansprüche 1 bis 8.

## Revendications

1. Procédé de fonctionnement d'un dispositif électronique grand public, dans lequel les câbles d'une pluralité de câbles sont connectés à des ports d'entrée/sortie audio/vidéo correspondants du dispositif électronique grand public, le procédé comportant les étapes consistant à :
recevoir (S1) un signal vidéo analogique émis le long d'un câble connecté ;
détecter et mesurer (S2) un composant CA dans une partie du signal vidéo analogique reçu correspondant à une période de suppression de vidéo au cours d'une ligne de balayage horizontal ;
comparer (S3) le composant CA mesuré par rapport à un niveau de seuil prédéterminé ;
si un niveau du composant CA mesuré est supérieur par rapport au niveau de seuil prédéterminé, en réponse, extraire (S4) le composant CA mesuré, et puis comparer (S4) le composant CA mesuré par rapport à des signaux vidéo analogiques émis le long des câbles connectés restants en mesurant la similarité entre le composant CA mesuré et les signaux vidéo analogiques émis le long des câbles connectés restants ; et
s'il y a une similarité entre le composant CA mesuré et au moins l'un des signaux vidéo analogiques émis le long des câbles connectés restants, en réponse, fournir (S5) un message d'alerte à un utilisateur du dispositif électronique grand public pour permettre à l'utilisateur d'atténuer la diaphonie entre câbles.

2. Procédé selon la revendication 1, dans lequel la partie du signal vidéo analogique reçu dans laquelle le composant CA est détecté et mesuré correspond à une impulsion de synchronisation.

3. Procédé selon la revendication 1 ou la revendication 2, dans lequel le message d'alerte comporte des informations se rapportant à un câble le long duquel ledit au moins l'un des autres signaux ayant une similarité avec le composant CA mesuré est émis.

4. Procédé selon la revendication 3, dans lequel le message d'alerte comporte une instruction amenant l'utilisateur à retirer le câble le long duquel ledit au moins l'un des autres signaux ayant une similarité avec le composant CA mesuré est émis.

5. Procédé selon l'une quelconque des revendications 1 à 4, dans lequel l'étape consistant à fournir un message d'alerte comporte l'étape consistant à afficher le message d'alerte sur une unité d'affichage du dispositif électronique grand public.

6. Procédé selon l'une quelconque des revendications 1 à 5, dans lequel les autres signaux sont des signaux audio et/ou vidéo.

7. Procédé selon l'une quelconque des revendications 1 à 6, dans lequel la similarité est mesurée en utilisant la corrélation croisée.

8. Procédé selon l'une quelconque des revendications 1 à 7, dans lequel le niveau de seuil prédéterminé est stocké dans une mémoire non volatile du dispositif électronique grand public.

9. Dispositif électronique grand public, le dispositif comportant :
une pluralité de ports d'entrée/sortie audio/vidéo, chacun étant configuré pour être connecté à un câble ; et
un appareil de traitement de signal, qui est agencé pour :
recevoir (S1) un signal vidéo analogique émis le long d'un câble connecté ;
détecter et mesurer (S2) un composant CA dans une partie du signal vidéo analogique reçu correspondant à une période de suppression de vidéo au cours d'une ligne de balayage horizontal ;
comparer (S3) le composant CA mesuré par rapport à un niveau de seuil prédéterminé ;
si un niveau du composant CA mesuré est supérieur par rapport au niveau de seuil prédéterminé, en réponse, extraire (S4) le composant CA mesuré, et puis comparer (S4) le composant CA mesuré par rapport à des signaux vidéo analogiques émis le long des câbles connectés restants en mesurant la similarité entre le composant CA mesuré et les signaux vidéo analogiques émis le long des câbles connectés restants ; et
s'il y a une similarité entre le composant CA mesuré et au moins l'un des signaux vidéo analogiques émis le long des câbles connectés restants, en réponse, fournir (S5) un message d'alerte à un utilisateur du dispositif électronique grand public pour permettre à l'utilisateur d'atténuer la diaphonie entre câbles.

10. Dispositif selon la revendication 9, comportant :
une unité d'affichage, qui est agencée pour :
interagir avec l'appareil de traitement de signal ; et
afficher le message d'alerte fourni par l'appareil de traitement de signal en réponse à l'interaction avec l'appareil de traitement de signal.

11. Dispositif selon la revendication 9 ou la revendication 10, comportant :
une mémoire non volatile, qui est agencée pour :
stocker le niveau de seuil prédéterminé.

12. Dispositif selon l'une quelconque des revendications 9 à 11, dans lequel l'appareil de traitement de signal est agencé de telle sorte que la partie du signal vidéo analogique reçu dans lequel le composant CA est détecté et mesuré correspond à une impulsion de synchronisation.

13. Produit programme informatique comportant des instructions de programme de telle sorte que, quand le programme informatique est exécuté sur un dispositif, le dispositif informatique est agencé pour :
effectuer un procédé selon l'une quelconque des revendications 1 à 8.
